# EUROPÄISCHE PATENTSCHRIFT

(11) **EP 3 277 475 B1**
(45) Veröffentlichungstag und Bekanntmachung des Hinweises auf die Patenterteilung: **19.12.2018**
(21) Anmeldenummer: 16712367.8
(22) Anmeldetag: 31.03.2016
(51) Int. Cl.: B29C 45/00, B29C 59/14

(54) **SPRITZGIESSWERKZEUG UND VERFAHREN ZUR HERSTELLUNG EINES SPRITZGIESSTEILS**
INJECTION-MOLDING TOOL AND METHOD FOR PRODUCING AN INJECTION-MOLDED PART
OUTIL DE MOULAGE PAR INJECTION ET PROCÉDÉ DE PRODUCTION D'UNE PIÈCE MOULÉE PAR INJECTION

(30) Priorität: 31.03.2015 DE 102015104991
(43) Veröffentlichungstag der Anmeldung: 07.02.2018
(73) Patentinhaber: Plasmatreat GmbH, 33803 Steinhagen (DE)
(72) Erfinder: ENNEKING, Leonhard, 49401 Damme (DE); GRISHIN, Artur, 33803 Steinhagen (DE); BUSKE, Christian, 33619 Bielefeld (DE); KNOSPE, Alexander, 31848 Bad Münder (DE); NORDMEYER, Timo, 33604 Bielefeld (DE); MORITZER, Elmar, 33175 Bad Lippspringe (DE); SCHMIDT, Martin Andreas, 33604 Bielefeld (DE); LEISTER, Christian, 95030 Hof (DE)
(74) Vertreter: Cohausz & Florack
(86) Internationale Anmeldenummer: PCT/EP2016/057040
(87) Internationale Veröffentlichungsnummer: WO 2016/156479

(56) Entgegenhaltungen:
- EP-A2- 0 541 230
- WO-A2-03/013738
- DE-A1-102004 061 268
- DE-A1-102012 101 116
- JP-A- S63 256 426
- US-A1- 2009 174 120

## Beschreibung

Die Erfindung betrifft ein Spritzgießwerkzeug zur Herstellung eines Spritzgießteils, insbesondere aus Kunststoff, mit einer Spritzgießform, die eine Kavität entsprechend dem Negativ der Form des herzustellenden Spritzgießteils aufweist. Weiterhin betrifft die Erfindung ein Verfahren zur Herstellung eines Spritzgießteils mit einem Spritzgießwerkzeug.

Kunststoffe sind chemisch oft unreaktiv und schwer zu benetzen, da ihre langen Polymerketten eine geringe Oberflächenspannung aufweisen und keine oder nur wenige funktionelle Gruppen besitzen. Daher lassen sie sich schlecht verkleben, haben oft unzureichende Haftungseigenschaften und müssen an der Oberfläche mittels einer Vorbehandlung aktiviert werden.

Aus dem Stand der Technik ist es bekannt, Kunststoffe mit Plasma vorzubehandeln, um deren Oberfläche zu aktivieren. Bei der Plasmabehandlung fügen die Ionen und freien Elektronen im Plasmastrahl Stickstoff und Sauerstoff in die Polymeroberfläche ein. Mit der Plasmabehandlung lassen sich die Benetzungs- und Hafteigenschaften der Kunststoffe verbessern, so dass Materialien und Substrate mit Hilfe der Plasmabehandlung effizient und nach individuell definierbaren Oberflächeneigenschaften vorbehandelt werden können.

Viele Kunststoffkomponenten werden durch Spritzgießen hergestellt. Für die Vorbehandlung solcher Spritzgießteile sind verschiedene Verfahren denkbar.

Zum einen ist es möglich, die Oberfläche der Spritzgießteile "inline" im Spritzgießwerkzeug zu behandeln oder in einem nachgeschalteten Prozessschritt.

Insbesondere ist die Inline-Behandlung im Werkzeug mittels eines Roboters möglich. Bei diesem Verfahren wird nach dem Öffnen des Spritzgießwerkzeugs eine Plasmadüse mittels eines Roboters über die zu aktivierende Oberfläche gefahren. Der benötigte Öffnungsweg der Werkzeughälften für Roboter und Plasmadüse beträgt derzeit mindestens 37 cm. Da dieser Öffnungsweg für kleinere Maschinen oft nicht realisierbar ist, kommt eine Oberflächenbehandlung im Werkzeug als Prozessoption oft nicht in Betracht. Des Weiteren kommt es durch die längere Werkzeugöffnungsdauer, die Zeit zum Einfahren des Roboterarms und zum Abfahren der Strecke zu Einbußen in der Zykluszeit. Bei dem beschriebenen Prozess ist es ebenfalls nicht möglich komplexere Formteilgeometrien abzufahren, da bestimmte Bearbeitungswinkel nicht einstellbar sind und der Plasmastrahl Oberflächen in Hinterschneidungen nicht erreichen bzw. nicht aktivieren kann.

Alternativ ist es denkbar, die Plasmabehandlung in einem nachgeschalteten Prozessschritt durchzuführen. Zu diesem Zweck wird das Formteil nach dem Spritzgießzyklus der Maschine entnommen und die zu behandelnde Kontur außerhalb des Werkzeugs abgefahren.

Bei den zuvor beschrieben Verfahren ergeben sich jeweils zwei separate Prozessschritte, nämlich einerseits das Spritzen des Formteils und andererseits die Aktivierung der Oberfläche, deren Prozesszeiten sich addieren und Synergien nur in sehr geringem Maße genutzt werden können. Die Industrie strebt jedoch nach immer Energie- und Ressourcen-effizienteren Produktionsmethoden, um Zeit und Kosten zu sparen, den Ausschuss zu verringern und die Qualität zu verbessern.

Aus der US 2009/174120 A1 ist zudem eine Spritzgießvorrichtung mit einem Plasmagenerator bekannt.

Vor diesem Hintergrund liegt der vorliegenden Erfindung die Aufgabe zu Grunde, ein Verfahren und eine Vorrichtung zur Verfügung zu stellen, mit denen eine Plasmavorbehandlung spritzgegossener Bauteile effektiv ermöglicht wird.

Diese Aufgabe wird bei einem Spritzgießwerkzeug zur Herstellung eines Spritzgießteils, insbesondere aus Kunststoff, mit einer Spritzgießform, die eine Kavität entsprechend dem Negativ der Form des herzustellenden Spritzgießteils aufweist, erfindungsgemäß, wie definiert im unabhängigen Anspruch 1, zumindest teilweise dadurch gelöst, dass eine Plasmadüse, die zur Erzeugung eines atmosphärischen Plasmastrahls eingerichtet ist, derart an die Spritzgießform angeschlossen ist, dass ein in der Spritzgießform hergestelltes Spritzgießteil in der Spritzgießform mit einem Plasmastrahl beaufschlagbar ist.

Auf diese Weise kann das Spritzgießteil direkt im Anschluss an den Spritzvorgang in der Spritzgießform vorbehandelt werden, ohne dass eine zeitliche Verzögerung durch ein Öffnen der Spritzgießform oder das Heranfahren eines Roboters erforderlich ist.

Mittels einer Integration der Plasmadüse in das Spritzgießwerkzeug, insbesondere in die bewegliche Seite des Spritzgießwerkzeugs, wird eine Plasmabehandlung noch im geschlossenen Werkzeug ermöglicht. Auf diese Weise kann eine erhebliche Zeitersparnis erreicht und eine Steigerung der Spritzgießteilkomplexität ermöglicht werden.

Als synergetischer Effekt wurde erkannt, dass auf diese Weise die Restwärme des Spritzgießteils genutzt werden kann, um die Affinität der Materialien bzw. die Oberflächenspannung, zu steigern. Weiterhin wurde festgestellt, dass eine Vorbehandlung im geschlossenen Spritzgießwerkzeug eine geringere Beaufschlagung mit Plasmastrahl, insbesondere auch eine geringere Beaufschlagungsdauer, erfordert, so dass sich ein weiterer Zeit- und Energieersparniseffekt ergibt.

Weiterhin wurde als synergetischer Effekt erkannt, dass der im Spritzgießwerkzeug typischerweise entstehende Unterdruck die Plasmaausbreitung und Aktivierung der Spritzgießteil-Oberfläche begünstigt.

Die Spritzgießform umfasst mindestens eine Matrize und zudem einen oder mehrere Kerne. Die mindestens eine Matrize und der (oder die) ggf. vorgesehene Kern (oder Kerne) bilden die Form der Kavität aus.

Unter einem Kern wird vorliegend ein von der Matrize separater Teil der Spritzgießform verstanden, der zumindest einen Teil der Kavität bildet. Beispielsweise kann der Kern die Außenkontur einer Nut des in der Kavität herzustellenden Spritzgießteils vorgeben.

Weiterhin weist die Spritzgießform einen Angusskanal auf, an den im Betrieb die Spritzeinheit angeschlossen ist, um flüssigen Kunststoff in die Kavität der Spritzgießform zu leiten.

In das Spritzgießwerkzeug können bei Bedarf auch mehrere Plasmadüsen integriert werden.

Die zuvor genannte Aufgabe wird erfindungsgemäß, wie definiert im unabhängigen Anspruch 8, weiterhin zumindest teilweise gelöst durch ein Verfahren zur Herstellung eines Spritzgießteils mit einem Spritzgießwerkzeug, insbesondere dem zuvor beschriebenen Spritzgießwerkzeug, bei dem das Spritzgießmaterial, insbesondere ein Kunststoff, in eine Kavität der Spritzgießform eingeleitet wird, so dass sich ein Spritzgießteil bildet, und bei dem das Spritzgießteil in der Spritzgießform mit einem atmosphärischen Plasmastrahl beaufschlagt wird.

Im Folgenden werden verschiedene Ausführungsformen des Spritzgießwerkzeugs und des Verfahrens beschrieben, wobei die einzelnen Ausführungsformen jeweils sowohl für das Spritzgießwerkzeug, als auch für das Verfahren anwendbar sind. Die einzelnen Ausführungsformen lassen sich zudem untereinander kombinieren.

Erfindungsgemäß weist die Spritzgießform ein verfahrbares Matrizenteil auf, so dass die Spritzgießform zwischen einer geschlossenen Anordnung für den Spritzgießvorgang und einer geöffneten Anordnung für den Auswerfvorgang verfahrbar ist, und die Plasmadüse ist derart an die Spritzgießform angeschlossen, dass ein in der Spritzgießform hergestelltes Spritzgießteil in der Matrize mit einem Plasmastrahl beaufschlagbar ist, während sich die Spritzgießform in der geschlossenen Anordnung befindet. Insbesondere kann die Spritzgießform eine erste feste Matrizenhälfte und eine zweite verfahrbare Matrizenhälfte aufweisen.

Die Plasmadüse ist erfindungsgemäß derart an die Spritzgießform angeschlossen, dass ein in der Spritzgießform hergestelltes Spritzgießteil in der Matrize mit einem Plasmastrahl beaufschlagbar ist, während sich die Spritzgießform in der geschlossenen Anordnung befindet, d.h. geschlossen ist. Auf diese Weise ist ein Öffnen der Spritzgießform für die Vorbehandlung nicht erforderlich.

Bei einer Ausführungsform ist eine Einlassöffnung vorgesehen, durch die ein mit der Plasmadüse erzeugter Plasmastrahl in die Kavität der Spritzgießform einleitbar ist. Bei einer weiteren Ausführungsform ist eine Auslassöffnung vorgesehen, durch die ein über die Einlassöffnung in die Kavität eingeleitetes Gas aus der Kavität hinaus gelangen kann.

Erfindungsgemäß umfasst die Spritzgießform einen Kern, der bei geschlossener Anordnung der Spritzgießform zwischen einer ersten Position für den Spritzgießvorgang und einer zweiten Position für den Vorbehandlungsvorgang verfahrbar ist, wobei der Kern beim Verfahren von der ersten in die zweite Position einen Hohlraum in der Spritzgießform freigibt, in den ein mit der Plasmadüse erzeugter Plasmastrahl einleitbar ist. Auf diese Weise kann durch die Bewegung des Kerns ein Bereich gezielt für die Plasmavorbehandlung freigegeben werden. Bei einer entsprechenden Ausführungsform des Verfahrens wird ein Kern der Spritzgießform derart verfahren, dass ein Hohlraum in der Spritzgießform freigegeben wird, durch den der atmosphärische Plasmastrahl geleitet wird.

Der Kern ist bei geschlossener Anordnung der Spritzgießform zwischen einer ersten und einer zweiten Position verfahrbar. Demnach kann der Kern in der Spritzgießform verfahren werden, ohne dass die Spritzgießform hierzu geöffnet werden muss.

Der Kern kann insbesondere die Außenkontur einer Nut des in der Kavität herzustellenden Spritzgießteils vorgeben. Beim Verfahren in die zweite Position kann der Kern diese Nut im zuvor hergestellten Spritzgießteil zumindest teilweise freigeben, so dass eine Vorbehandlung der Innenfläche der Nut des Spritzgießteils ermöglicht wird.

Bei einer Ausführungsform sind die Einlassöffnung und die Auslassöffnung derart angeordnet, dass ein durch die Einlassöffnung zur Auslassöffnung strömendes Plasma entlang eines zu behandelnden Bereichs des Spritzgießteils geführt wird, insbesondere entlang einer Nut des Spritzgießteils.

Insbesondere können die Einlassöffnung und die Auslassöffnung derart angeordnet sein, dass das Plasma bzw. der Plasmastrahl durch einen durch Verfahren eines Kerns der Spritzgießform freigegebenen Hohlraum, insbesondere an einer Nut des Spritzgießteils, geleitet wird.

Bei einer Ausführungsform sind Verschlussmittel vorgesehen, die dazu eingerichtet sind, die Plasmadüse während des Spritzgießvorgangs von der Kavität zu trennen. Auf diese Weise wird die Plasmadüse vor eindringendem Kunststoff beim Spritzgießvorgang geschützt. Bei den Verschlussmitteln kann es sich beispielsweise um ein an der Plasmadüse vorgesehenes Verschlusselement, wie zum Beispiel eine Verschlussnadel, handeln.

Bei einer Ausführungsform ist die Plasmadüse dazu eingerichtet, einen atmosphärischen Plasmastrahl mittels Erzeugung einer Bogenentladung durch Anlegen einer hochfrequenten Hochspannung zwischen zwei Elektroden in einem Arbeitsgas zu erzeugen. Bei einer entsprechenden Ausführungsform des Verfahrens wird der atmosphärischen Plasmastrahls mittels Erzeugung einer Bogenentladung durch Anlegen einer hochfrequenten Hochspannung zwischen zwei Elektroden in einem Arbeitsgas erzeugt.

Unter einer hochfrequenten Hochspannung wird typischerweise eine Spannung von 1 bis 100 kV, insbesondere von 1 bis 50 kV, bevorzugt von 10 bis 50 kV, bei einer Frequenz von 1 bis 350 kHz, bevorzugt 1 bis 100 kHz, besonders bevorzugt 10 bis 100 kHz, insbesondere von 10 bis 50 kHz verstanden. Die hochfrequente Hochspannung kann eine hochfrequente Wechselspannung, aber auch eine gepulste Gleichspannung sein.

Ein auf diese Weise erzeugter atmosphärischer Plasmastrahl weist eine hohe Reaktivität bei verhältnismäßig geringer Temperatur auf und ermöglicht eine effektive Vorbehandlung von Kunststoffoberflächen, ohne diese zu beschädigen.

Die Plasmadüse kann gepulst betrieben werden. Insbesondere wird bei einer Ausführungsform die Bogenentladung gepulst erzeugt. Es hat sich gezeigt, dass sich auf diese Weise die Effektivität der Vorbehandlung erhöhen lässt.

Vorzugsweise wird der Plasmastrahl in einem Arbeitsgas erzeugt, wobei als Arbeitsgas bevorzugt Stickstoff oder ein Gasgemisch mit einem Stickstoffgehalt von mindestens 90 at.%, vorzugsweise mindestens 95 at.%, insbesondere mindestens 99 at.% verwendet wird.

Bei einer Ausführungsform wird der Plasmastrahl in einem Arbeitsgas erzeugt, wobei als Arbeitsgas ein Gas mit folgender Zusammensetzung verwendet wird: Sauerstoff(O₂): 0 - 10 at.%, vorzugsweise 0 - 5 at.%, besonders bevorzugt 0 - 1 at.%, insbesondere 0,1 - 1 at.%; sonstige Gase: in Summe 0 - 10 at.%, vorzugsweise 0 - 5 at.%, insbesondere 0 - 1 at.%; Stickstoff(N₂): Rest. Durch die Verwendung eines Arbeitsgases, das im Wesentlichen Stickstoff enthält, kann die Reaktivität des Plasmastrahls in einem größeren Abstand zur Plasmadüse aufrechterhalten werden. Durch die Zugabe geringer Mengen Sauerstoff kann die Effektivität der Behandlung erhöht werden.

Bei einer Ausführungsform ist eine Steuerungseinrichtung vorgesehen, die dazu eingerichtet ist, das Spritzgießwerkzeug entsprechend dem zuvor beschriebenen Verfahren oder einer Ausführungsform dieses Verfahrens zu steuern.

Die Steuerungseinrichtung umfasst vorzugsweise einen Prozessor und einen damit verbundenen Speicher, in dem Befehle gespeichert sind, deren Ausführung auf dem Prozessor die Steuerung des Spritzgießwerkzeugs entsprechend dem zuvor beschriebenen Verfahren oder einer Ausführungsform dieses Verfahrens bewirkt.

Weitere Merkmale und Vorteile der Erfindung ergeben sich aus der folgenden Beschreibung von Ausführungsbeispielen, wobei auf die beigefügte Zeichnung Bezug genommen wird.

In der Zeichnung zeigen
- Fig. 1: ein Ausführungsbeispiel des erfindungsgemäßen Spritzgießwerkzeugs,
- Fig. 2: ein weiteres Ausführungsbeispiel des erfindungsgemäßen Spritzgießwerkzeugs,
- Fig. 3: ein Ausführungsbeispiel des erfindungsgemäßen Verfahrens und
- Fig. 4: eine Plasmadüse zur Erzeugung eines atmosphärischen Plasmastrahls.

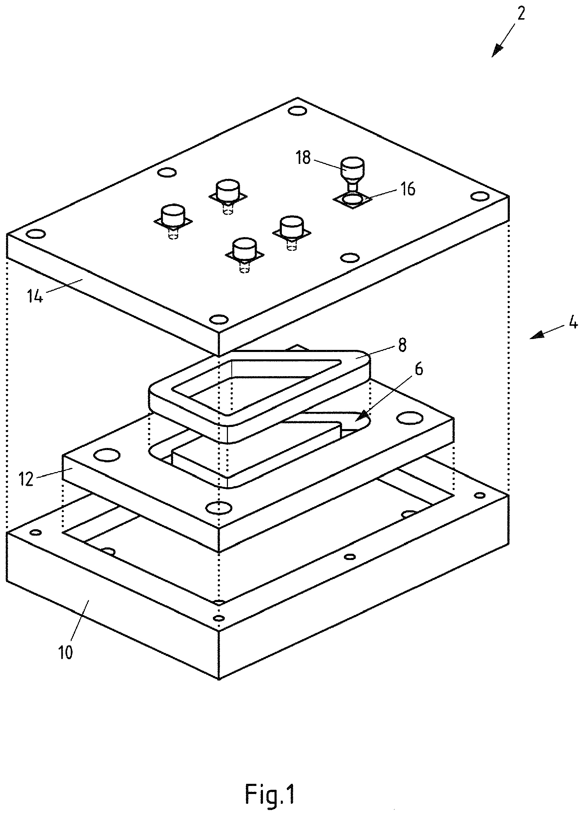

Fig. 1 zeigt ein Ausführungsbeispiel des erfindungsgemäßen Spritzgießwerkzeugs in einer perspektivischen Explosionsdarstellung.

Das Spritzgießwerkzeug 2 weist eine mehrteilige Spritzgießform 4 auf, die eine Kavität 6 entsprechend dem Negativ der Form des herzustellenden Spritzgießteils 8 aufweist. Die Spritzgießform 4 umfasst eine im Betrieb feststehende Matrizenhälfte mit einer Aufnahme 10 und einem Einsatz 12 sowie eine verfahrbare Matrizenhälfte 14, die für den Spritzgießvorgang fest an der feststehenden Matrizenhälfte anliegt (geschlossene Anordnung).

Die feststehende Matrizenhälfte ist im Betrieb über einen Angusskanal (nicht dargestellt) an eine Spritzeinheit angeschlossen, so dass aus der Spritzeinheit durch den Angusskanal flüssiger Kunststoff in die Kavität 6 eingespritzt werden kann. Der in der Kavität 6 erstarrende Kunststoff bildet dann das Spritzgießteil 8.

Die verfahrbare Matrizenhälfte 14 weist mehrere Öffnungen 16 auf, in die jeweils eine Plasmadüse 18 eingesetzt ist. Auf diese Weise kann das Spritzgießteil 8 bei geschlossenem Spritzgießwerkzeug 2 mit einem aus einer Plasmadüse 18 austretenden Plasmastrahl beaufschlagt und so vorbehandelt werden. Die Anzahl und Anordnung der Plasmadüsen ist insbesondere an die Form der Kavität 6 bzw. des in dieser geformten Spritzgießteils 8 angepasst.

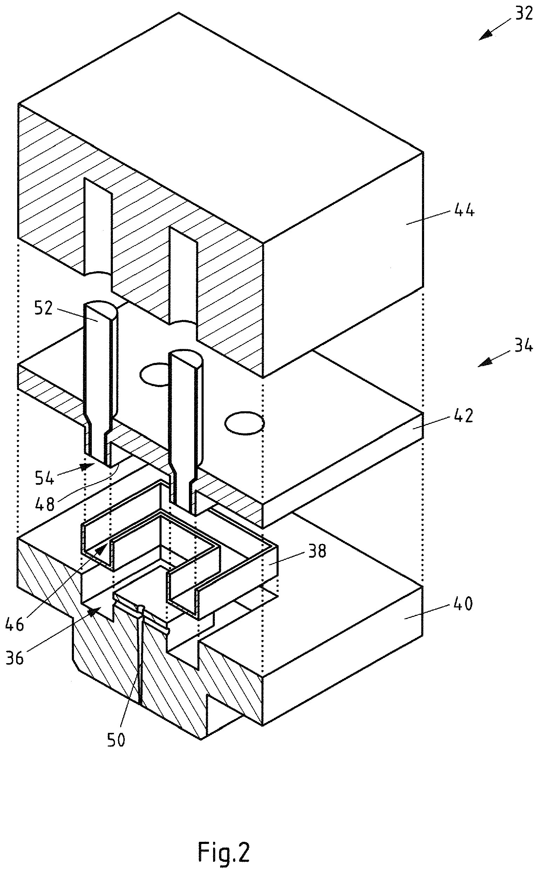

Fig. 2 zeigt ein weiteres Ausführungsbeispiel des erfindungsgemäßen Spritzgießwerkzeugs in einer perspektivischen Explosionsdarstellung im Schnitt.

Das Spritzgießwerkzeug 32 weist eine mehrteilige Spritzgießform 34 auf, die eine Kavität 36 entsprechend dem Negativ der Form des herzustellenden Spritzgießteils 38 aufweist. Die Spritzgießform 34 umfasst eine im Betrieb feststehende Matrizenhälfte sowie einen Kern 42, der an einer verfahrbaren Matrizenhälfte (nicht dargestellt) angeordnet ist. Bei dem in Fig. 2 dargestellten Ausführungsbeispiel schließt der Kern 42 die Kavität 36 vollständig nach oben ab, so dass die verfahrbaren Matrizenhälfte nur als Stütze für den Kern 42 wirkt. Alternativ kann auch die verfahrbare Matrizenhälfte die Kavität 36 zumindest bereichsweise nach oben abschließen.

Oberhalb des Kerns 42 und der verfahrbaren Matrizenhälfte ist noch ein Stützteil 44 angeordnet. Für den Spritzgießvorgang liegen die verfahrbare Matrizenhälfte und das Stützteil 44 fest an der feststehenden Matrizenhälfte 40 an (geschlossene Anordnung).

Der Kern 42 ist relativ zur verfahrbaren Matrizenhälfte verfahrbar. Insbesondere kann der Kern 42 in einer erste Position für den Spritzgießvorgang in Richtung der feststehenden Matrizenhälfte 40 verfahren werden, so dass er die Außenkontur einer in dem herzustellenden Spritzgießteil 38 zu erzeugenden Nut 46 bildet. Zu diesem Zweck ist an der Unterseite des Kerns 42 eine der Innenkontur der Nut 46 entsprechende Erhebung 48 vorgesehen.

Die verfahrbare Matrizenhälfte ist derart ausgebildet, dass der Kern 42 bei geschlossener Anordnung der Spritzgießform 34 zwischen der ersten und der zweiten Position verfahren werden kann, d.h. während die verfahrbare Matrizenhälfte an der feststehenden Matrizenhälfte 40 anliegt.

Die feststehende Matrizenhälfte 40 ist im Betrieb über einen Angusskanal 50 an eine Spritzeinheit (nicht dargestellt) angeschlossen, so dass aus der Spritzeinheit durch den Angusskanal 50 flüssiger Kunststoff in die Kavität 36 eingespritzt werden kann. Der in der Kavität 36 erstarrende Kunststoff bildet dann das Spritzgießteil 38.

Nach dem Erstarren des Kunststoffs kann der Kern 42 für die Vorbehandlung in eine zweite Position in Richtung des Stützteils 44 verfahren, d.h. in die verfahrbare Matrizenhälfte zurückgezogen werden, so dass durch das Verfahren des Kerns 42 im Bereich der Nut 46 des Spritzgießteils ein Hohlraum gebildet wird. Die Spritzgießform 34 bleibt während des Verfahrens des Kerns 42 geschlossen.

In die verfahrbare Matrizenhälfte sind mehrere Plasmadüsen 52 integriert. Nach dem Zurückziehen des Kerns 42 in die zweite Position können die Plasmadüsen 52 durch jeweilige Öffnungen 54 im Kern 42 derart angeordnet werden, dass ein aus den Plasmadüsen 52 austretender Plasmastrahl in den im Bereich der Nut 46 gebildeten Hohlraum gelangt und die Innenkontur der Nut 46 beaufschlagt.

Auf diese Weise kann das Spritzgießteil 38 bei geschlossenem Spritzgießwerkzeug 32 mit einem aus einer Plasmadüse 52 austretenden Plasmastrahl beaufschlagt und so vorbehandelt werden. Die Anzahl und Anordnung der Plasmadüsen ist insbesondere an die Form der Kavität 36 bzw. des in dieser geformten Spritzgießteils 38 angepasst.

Der aus den Plasmadüsen 52 austretende Plasmastrahl bzw. Gasstrom wird über eine dafür vorgesehene Auslassöffnung (nicht dargestellt) wieder aus der Spritzgießform herausgeleitet. Die Plasmadüse 52 und die Auslassöffnung sind vorzugsweise so zueinander angeordnet, dass der von der Plasmadüse 52 zur Auslassöffnung geleitete Plasmastrahl die Innenoberfläche der Nut 46 behandelt.

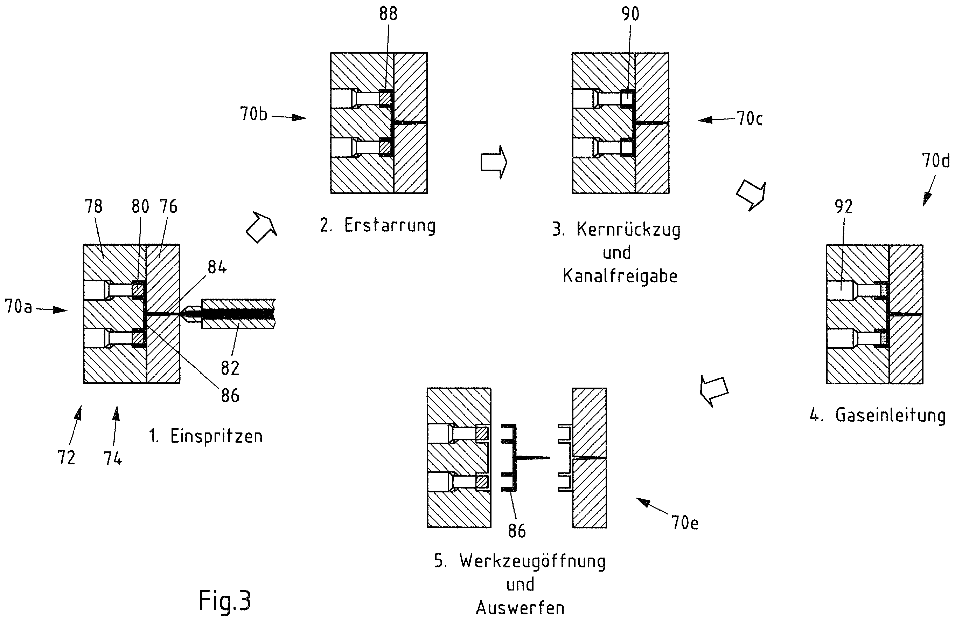

Fig. 3 zeigt ein Ausführungsbeispiel des erfindungsgemäßen Verfahrens in schematischer Darstellung. Die Fig. 3 zeigt schematische Querschnitte eines Spritzgießwerkzeugs 72 zu fünf verschiedenen Verfahrensschritten 70a-e des Verfahrens. Das Spritzgießwerkzeug 72 kann beispielsweise wie das Spritzgießwerkzeug 32 aus Fig. 2 ausgebildet sein.

Im ersten Schritt 70a ist die Spritzgießform 74 des Spritzgießwerkzeugs 72 geschlossen, d.h. die feststehende Matrizenhälfte 76 und die verfahrbare Matrizenhälfte 78 der Spritzgießform 74 liegen aneinander an. Weiterhin befindet sich ein an der verfahrbaren Matrizenhälfte 78 angeordneter Kern 80 in einer ersten Position für den Spritzgießvorgang. Die Spritzgießform 74 ist an eine Spritzeinheit 82 angeschlossen, von der unter hohem Druck flüssiger Kunststoff durch den Angusskanal 84 in die Kavität 86 geleitet wird.

Im zweiten Schritt 70b erstarrt der flüssige Kunststoff in der Kavität 86 zum Spritzgießteil 88.

Im dritten Schritt 70c wird der Kern 80 von der ersten Position in eine zweite Position für die Vorbehandlung zurückgezogen, so dass im Bereich einer Nut des Spritzgießteils 88 ein Hohlraum 90 freigegeben wird.

Im vierten Schritt 70d wird über vorgesehene Plasmadüsen 92 ein Plasmastrahl in den Hohlraum 90 eingeleitet, so dass die Innenoberfläche der Nut durch den Plasmastrahl vorbehandelt wird.

Im fünften Schritt 70e werden die Spritzgießform 74 geöffnet und das Spritzgießteil 88 mittels vorgesehener Auswurfstifte ausgeworfen.

An den fünften Schritt 70e kann sich wieder der erste Schritt 70a zur Herstellung des nächsten Spritzgießteils anschließen, so dass sich das beschriebene Verfahren ohne Weiteres in eine Massenproduktionsanlage integrieren lässt.

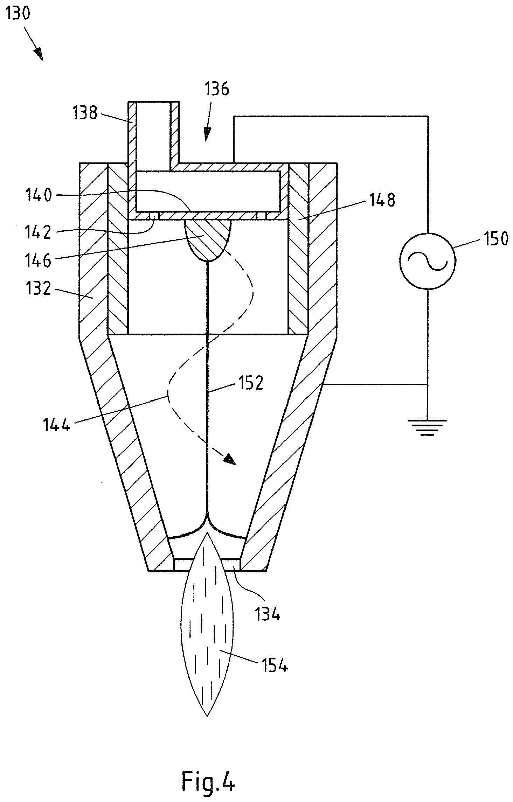

Fig. 4 zeigt in schematischer Querschnittsdarstellung eine Plasmadüse zur Erzeugung eines atmosphärischen Plasmastrahls, die für den Einsatz in dem Spritzgießwerkzeug, insbesondere den in den Fig. 1 und 2 gezeigten Spritzgießwerkzeugen, geeignet ist.

Die Plasmadüse 130 weist ein Düsenrohr 132 aus Metall auf, das sich im Wesentlichen konisch zu einer Düsenrohrmündung 134 verjüngt. An dem der Düsenrohrmündung 134 entgegengesetztem Ende weist das Düsenrohr 132 eine Dralleinrichtung 136 mit einem Einlass 138 für ein Arbeitsgas auf. Als Arbeitsgas wird bevorzugt Stickstoff oder ein Gasgemisch mit einem Stickstoffgehalt von mindestens 90 at.%, vorzugsweise mindestens 95 at.%, insbesondere mindestens 99 at.% verwendet.

Eine Zwischenwand 140 der Dralleinrichtung 136 weist einen Kranz von schräg in Umfangsrichtung angestellten Bohrungen 142 auf, durch die das Arbeitsgas verdrallt wird. Der stromabwärtige, konisch verjüngte Teil des Düsenrohrs 132 wird deshalb von dem Arbeitsgas in Form eines Wirbels 144 durchströmt, dessen Kern auf der Längsachse des Düsenrohrs 132 verläuft.

An der Unterseite der Zwischenwand 140 ist mittig eine Elektrode 146 angeordnet, die koaxial in Richtung des verjüngten Abschnitts in das Düsenrohr 132 hineinragt. Die Elektrode 146 ist elektrisch mit der Zwischenwand 140 und den übrigen Teilen der Dralleinrichtung 136 verbunden. Die Dralleinrichtung 136 ist durch ein Keramikrohr 148 elektrisch gegen das Düsenrohr 132 isoliert. Über die Dralleinrichtung 136 wird an die Elektrode 146 eine hochfrequente Hochspannung angelegt, die von einem Transformator 150 erzeugt wird. Das Düsenrohr 132 ist geerdet. Durch die angeregte Spannung wird eine Hochfrequenzentladung in Form eines Lichtbogens 152 zwischen der Elektrode 146 und dem Düsenrohr 132 erzeugt.

Die Begriffe "Lichtbogen" bzw. "Bogenentladung" werden vorliegend als phänomenologische Beschreibung der Entladung verwendet, da die Entladung in Form eines Lichtbogens auftritt. Der Begriff "Lichtbogen" wird anderweitig auch als Entladungsform bei Gleichspannungsentladungen mit im Wesentlichen konstanten Spannungswerten verwendet. Vorliegend handelt es sich jedoch um eine Hochfrequenzentladung in Form eines Lichtbogens, also um eine hochfrequente Bogenentladung.

Aufgrund der drallförmigen Strömung des Arbeitsgases wird dieser Lichtbogen 152 im Wirbelkern auf der Achse des Düsenrohrs 132 kanalisiert, so dass er sich erst im Bereich der Düsenrohrmündung 134 zur Wand des Düsenrohrs 132 verzweigt.

Das Arbeitsgas, das im Bereich des Wirbelkerns und damit in unmittelbarer Nähe des Lichtbogens 152 mit hoher Strömungsgeschwindigkeit rotiert, kommt mit dem Lichtbogen 152 in innige Berührung und wird dadurch zum Teil in den Plasmazustand überführt, so dass ein atmosphärischer Plasmastrahl 154 durch die Düsenrohrmündung 134 aus der Plasmadüse 130 austritt.

Der aus der Plasmadüse 130 austretende Plasmastrahl 154 weist eine hohe Reaktivität bei gleichzeitig relativ geringer Temperatur auf. Daher kann eine Kunststoffoberfläche mit dem Plasmastrahl 154 effektiv vorbehandelt werden, ohne dass die Kunststoffoberfläche hierdurch beschädigt wird.

## Patentansprüche

1. Spritzgießwerkzeug (2, 32, 72) zur Herstellung eines Spritzgießteils (8, 38, 88), insbesondere aus Kunststoff,
- mit einer Spritzgießform (4, 34, 74), die eine Kavität (6, 36, 86) entsprechend dem Negativ der Form des herzustellenden Spritzgießteils (8, 38, 88) aufweist,
- wobei die Spritzgießform (4, 34, 74) ein verfahrbares Matrizenteil (14, 78) aufweist, so dass die Spritzgießform (4, 34, 74) zwischen einer geschlossenen Anordnung für den Spritzgießvorgang und einer geöffneten Anordnung für den Auswerfvorgang verfahrbar ist,
**dadurch gekennzeichnet,**
- **dass** eine Plasmadüse (18, 52, 92, 130), die zur Erzeugung eines atmosphärischen Plasmastrahls (154) eingerichtet ist, derart an die Spritzgießform (4, 34, 74) angeschlossen ist, dass ein in der Spritzgießform (4, 34, 74) hergestelltes Spritzgießteil (8, 38, 88) in der Spritzgießform (4, 34, 74) mit einem Plasmastrahl (154) beaufschlagbar ist,
- **dass** die Plasmadüse (18, 52, 92, 130) derart an die Spritzgießform (4, 34, 74) angeschlossen ist, dass ein in der Spritzgießform (4, 34, 74) hergestelltes Spritzgießteil (8, 38, 88) in der Spritzgießform (4, 34, 74) mit einem Plasmastrahl (154) beaufschlagbar ist, während sich die Spritzgießform (4, 34, 74) in der geschlossenen Anordnung befindet, und
- **dass** die Spritzgießform (4, 34, 74) einen Kern (42, 80) aufweist, der bei geschlossener Anordnung der Spritzgießform (4, 34, 74) zwischen einer ersten Position für den Spritzgießvorgang und einer zweiten Position für den Vorbehandlungsvorgang verfahrbar ist, wobei der Kern (42, 80) beim Verfahren von der ersten in die zweite Position einen Hohlraum (90) in der Spritzgießform (4, 34, 74) freigibt, in den ein mit der der Plasmadüse (18, 52, 92,130) erzeugter Plasmastrahl (154) einleitbar ist.

2. Spritzgießwerkzeug nach Anspruch 1,
**dadurch gekennzeichnet,**
**dass** eine Einlassöffnung vorgesehen ist, durch die ein mit der Plasmadüse (18, 52, 92, 130) erzeugter Plasmastrahl (154) in die Kavität (6, 36, 86) der Spritzgießform (4, 34, 74) einleitbar ist.

3. Spritzgießwerkzeug nach Anspruch 2,
**dadurch gekennzeichnet,**
**dass** eine Auslassöffnung vorgesehen ist, durch die ein über die Einlassöffnung in die Kavität (6, 36, 86) eingeleitetes Gas aus der Kavität (6, 36, 86) hinaus gelangen kann.

4. Spritzgießwerkzeug nach Anspruch 3,
**dadurch gekennzeichnet,**
**dass** die Einlassöffnung und die Auslassöffnung derart angeordnet sind, dass ein durch die Einlassöffnung zur Auslassöffnung strömendes Plasma entlang eines zu behandelnden Bereichs des Spritzgießteils (8, 38, 88) geführt wird, insbesondere entlang einer Nut (46) des Spritzgießteils (8, 38, 88).

5. Spritzgießwerkzeug nach einem der Ansprüche 1 bis 4,
**dadurch gekennzeichnet,**
**dass** Verschlussmittel vorgesehen sind, die dazu eingerichtet sind, die Plasmadüse (18, 52, 92, 130) während des Spritzgießvorgangs von der Kavität (6, 36, 86) zu trennen.

6. Spritzgießwerkzeug nach einem der Ansprüche 1 bis 5,
**dadurch gekennzeichnet,**
**dass** die Plasmadüse (18, 52, 92, 130) dazu eingerichtet ist, einen atmosphärischen Plasmastrahl (154) mittels Erzeugung einer Bogenentladung durch Anlegen einer hochfrequenten Hochspannung zwischen zwei Elektroden in einem Arbeitsgas zu erzeugen.

7. Spritzgießwerkzeug nach einem der Ansprüche 1 bis 6,
**dadurch gekennzeichnet,**
**dass** eine Steuerungseinrichtung vorgesehen ist, die dazu eingerichtet ist, das Spritzgießwerkzeug (2, 32, 72) entsprechend einem Verfahren nach einem der Ansprüche 8 bis 11 zu steuern.

8. Verfahren zur Herstellung eines Spritzgießteils (8, 38, 88) mit einem Spritzgießwerkzeug (2, 32, 72) nach einem der Ansprüche 1 bis 7,
- bei dem das Spritzgießmaterial, insbesondere ein Kunststoff, in eine Kavität (6, 36, 86) der Spritzgießform (4, 34, 74) eingeleitet wird, so dass sich ein Spritzgießteil (8, 38, 88) bildet,
- bei dem das Spritzgießteil (8, 38, 88) in der Spritzgießform (4, 34, 74) mit einem atmosphärischen Plasmastrahl (154) beaufschlagt wird und
- bei dem ein Kern der Spritzgießform (4, 34, 74) derart verfahren wird, dass ein Hohlraum (90) in der Spritzgießform (4, 34, 74) freigegeben wird, durch den der atmosphärische Plasmastrahl (154) geleitet wird.

9. Verfahren nach Anspruch 8,
**dadurch gekennzeichnet,**
**dass** der atmosphärischen Plasmastrahl (154) mittels Erzeugung einer Bogenentladung durch Anlegen einer hochfrequenten Hochspannung zwischen zwei Elektroden in einem Arbeitsgas erzeugt wird.

10. Verfahren nach Anspruch 9,
**dadurch gekennzeichnet,**
**dass** die Bogenentladung gepulst erzeugt wird.

11. Verfahren nach Anspruch 9 oder 10,
**dadurch gekennzeichnet,**
**dass** als Arbeitsgas ein Gas mit folgender Zusammensetzung verwendet wird:
O₂: 0 - 10 at.%, vorzugsweise 0 - 5 at.%, insbesondere 0,1 - 1 at.%;
sonstige Gase: in Summe 0 - 10 at.%, vorzugsweise 0 - 5 at.%, insbesondere 0 - 1 at.%;
N₂: Rest.

## Claims

1. Injection moulding tool (2, 32, 72) for producing an injection moulded part (8, 38, 88), in particular consisting of plastic,
- having an injection mould (4, 34, 74) which has a cavity (6, 36, 86) corresponding to the negative of the shape of the injection moulded part (8, 38, 88) to be produced,
- wherein the injection mould (4, 34, 74) has a movable die part (14, 78), so that the injection mould (4, 34, 74) is movable between a closed arrangement for the injection moulding operation and an open arrangement for the ejection operation,
**characterised in**
- **that** a plasma nozzle (18, 52, 92, 130), which is configured to produce an atmospheric plasma jet (154), is attached to the injection mould (4, 34, 74) in such a way that an injection moulded part (8, 38, 88) produced in the injection mould (4, 34, 74) can be impacted in the injection mould (4, 34, 74) with a plasma jet (154),
- **that** the plasma nozzle (18, 52, 92, 130) is attached to the injection mould (4, 34, 74) in such a way that an injection moulded part (8, 38, 88) produced in the injection mould (4, 34, 74) can be impacted in the injection mould (4, 34, 74) with a plasma jet (154) while the injection mould (4, 34, 74) is in the closed arrangement, and
- **that** the injection mould (4, 34, 74) has a core (42, 80) which when the injection mould (4, 34, 74) is in the closed arrangement is movable between a first position for the injection moulding operation and a second position for the pretreatment operation, wherein the core (42, 80) when moved from the first position into the second position frees a hollow space (90) in the injection mould (4, 34, 74), into which a plasma jet (154) produced by the plasma nozzle (18, 52, 92, 130) can be introduced.

2. Injection moulding tool according to Claim 1,
**characterised in**
**that** an inlet opening is provided, through which a plasma jet (154) produced by the plasma nozzle (18, 52, 92, 130) can be directed into the cavity (6, 36, 86) of the injection mould (4, 34, 74).

3. Injection moulding tool according to Claim 2,
**characterised in**
**that** an outlet opening is provided, through which a gas fed into the cavity (6, 36, 86) via the inlet opening can exit the cavity (6, 36, 86).

4. Injection moulding tool according to Claim 3,
**characterised in**
**that** the inlet opening and the outlet opening are arranged in such a way that a plasma flowing through the inlet opening to the outlet opening is conveyed along an area of the injection moulded part (8, 38, 88) to be treated, in particular along a groove (46) of the injection moulded part (8, 38, 88).

5. Injection moulding tool according to any one of Claims 1 to 4,
**characterised in**
**that** sealing means are provided which are configured to separate the plasma nozzle (18, 52, 92, 130) from the cavity (6, 36, 86) during the injection moulding operation.

6. Injection moulding tool according to any one of Claims 1 to 5,
**characterised in**
**that** the plasma nozzle (18, 52, 92, 130) is configured to produce an atmospheric plasma jet (154) by generating an arc discharge by applying a high-frequency high voltage between two electrodes in a working gas.

7. Injection moulding tool according to any one of Claims 1 to 6,
**characterised in**
**that** a control device is provided which is configured to control the injection moulding tool (2, 32, 72) corresponding to a method according to any one of Claims 8 to 11.

8. Method for producing an injection moulded part (8, 38, 88) using an injection moulding tool (2, 32, 72) according to any one of Claims 1 to 7,
- in which the injection moulding material, in particular a plastic material, is introduced into a cavity (6, 36, 86) of the injection mould (4, 34, 74), so that an injection moulded part (8, 38, 88) forms,
- in which the injection moulded part (8, 38, 88) in the injection mould (4, 34, 74) is impacted with an atmospheric plasma jet (154), and
- in which a core of the injection mould (4, 34, 74) is moved in such a way that a hollow space (90) is freed in the injection mould (4, 34, 74), through which the atmospheric plasma jet (154) is directed.

9. Method according to Claim 8,
**characterised in**
**that** the atmospheric plasma jet (154) is produced by generating an arc discharge by applying a high-frequency high voltage between two electrodes in a working gas.

10. Method according to Claim 9,
**characterised in**
**that** the arc discharge generation is pulsed.

11. Method according to Claim 9 or 10,
**characterised in**
**that** a gas having the following composition is used as the working gas:
O₂: 0 - 10 % at., preferably 0 - 5 % at., in particular 0.1 - 1 % at.;
other gases: in total 0 - 10 % at., preferably 0 - 5 % at., in particular 0 - 1 % at.;
N₂: remainder.

## Revendications

1. Outil de moulage par injection (2, 32, 72) destiné à la fabrication d'une pièce moulée par injection (8, 38, 88), en particulier en matière synthétique,
- avec un moule à injection (4, 34, 74) qui présente une cavité (6, 36, 86) correspondant au négatif de la forme de la pièce moulée par injection (8, 38, 88) à fabriquer,
- le moule à injection (4, 34, 74) présentant une partie matrice (14, 78) déplaçable de sorte que le moule par injection (4, 34, 74) puisse être déplacé entre une configuration fermée pour l'opération de moulage et une configuration ouverte pour l'opération d'éjection,
**caractérisé en ce que**,
- une buse à plasma (18, 52, 92, 130), laquelle est configurée pour la création d'un faisceau de plasma atmosphérique (154), est raccordée au moule à injection (4, 34, 74) de telle sorte qu'une pièce moulée par injection (8, 38, 88), fabriquée dans le moule à injection (4, 34, 74), puisse être soumise à un faisceau de plasma (154) dans le moule à injection (4, 34, 74),
- la buse à plasma (18, 52, 92, 130) est raccordée au moule à injection (4, 34, 74) de telle sorte qu'une pièce moulée par injection (8, 38, 88), fabriquée dans le moule à injection (4, 34, 74), puisse être soumise à un faisceau de plasma (154) dans le moule à injection (4, 34, 74) lorsque le moule à injection (4, 34, 74) se trouve dans la configuration fermée, et
- le moule à injection (4, 34, 74) présente une partie centrale (42, 80) qui peut être déplacée, lors de la configuration fermée du moule à injection (4, 34, 74), entre une première position pour l'opération de moulage et une deuxième position pour l'opération de prétraitement, la partie centrale (42, 80), lors du déplacement de la première vers la deuxième position, libérant un espace creux (90) dans le moule à injection (4, 34, 74), dans lequel espace creux peut être introduit un faisceau de plasma (154) obtenu avec la buse à plasma (18, 52, 92, 130).

2. Outil de moulage par injection selon la revendication 1,
**caractérisé en ce que**
l'on prévoit une ouverture d'admission à travers laquelle un faisceau de plasma (154), obtenu avec la buse à plasma (18, 52, 92,130), peut être introduit dans la cavité (6, 36, 86) du moule à injection (4, 34, 74).

3. Outil de moulage par injection selon la revendication 2,
**caractérisé en ce que**
l'on prévoit une ouverture de sortie à travers laquelle un gaz, introduit dans la cavité (6, 36, 86) à travers l'ouverture d'admission, peut parvenir hors de la cavité (6, 36, 86).

4. Outil de moulage par injection selon la revendication 3,
**caractérisé en ce que**
l'ouverture d'admission et l'ouverture de sortie sont agencées de telle sorte qu'un plasma, s'écoulant à travers l'ouverture d'admission vers l'ouverture de sortie, est conduit le long d'une zone à traiter de la pièce moulée par injection (8, 38, 88), en particulier le long d'une rainure (46) de la pièce moulée par injection (8, 38, 88).

5. Outil de moulage par injection selon l'une des revendications 1 à 4,
**caractérisé en ce que**
l'on prévoit des moyens de fermeture qui sont conçus de sorte à séparer la buse à plasma (18, 52, 92, 130) de la cavité (6, 36, 86) pendant l'opération de moulage par injection.

6. Outil de moulage par injection selon l'une des revendications 1 à 5,
**caractérisé en ce que**
la buse à plasma (18, 52, 92, 130) est conçue de sorte à obtenir un faisceau de plasma atmosphérique (154) au moyen de la création d'une décharge en arc par l'application d'une haute tension à haute fréquence entre deux électrodes dans un gaz de travail.

7. Outil de moulage par injection selon l'une des revendications 1 à 6,
**caractérisé en ce que**
l'on prévoit un dispositif de commande qui est conçu de sorte à commander l'outil de moulage par injection (2, 32, 72) conformément à un procédé selon l'une des revendications 8 à 11.

8. Procédé de fabrication d'une pièce moulée par injection (8, 38, 88) avec un outil de moulage à injection (2, 32, 72), selon l'une des revendications 1 à 7,
- lors duquel le matériau de moulage par injection, en particulier une matière synthétique, est introduit dans une cavité (6, 36, 86) du moule à injection (4, 34, 74) de sorte à former une pièce moulée par injection (8, 38, 88),
- lors duquel la pièce moulée par injection (8, 38, 88) est soumise à un faisceau de plasma atmosphérique (154) dans le moule à injection (4, 34, 74),
- lors duquel une partie centrale du moule à injection (4, 34, 74) est déplacée de sorte à libérer un espace creux (90) dans le moule à injection (4, 34, 74), à travers lequel espace creux est conduit le faisceau de plasma atmosphérique (154).

9. Procédé selon la revendication 8,
**caractérisé en ce que**
le faisceau de plasma atmosphérique (154) est créé au moyen de la création d'une décharge en arc par l'application d'une haute tension à haute fréquence entre deux électrodes dans un gaz de travail.

10. Procédé selon la revendication 9,
**caractérisé en ce que**
la décharge en arc est créée de manière puisée.

11. Procédé selon la revendication 9 ou 10,
**caractérisé en ce qu'**un gaz ayant la composition suivante est utilisé en tant que gaz de travail:
O₂ : 0 - 10 % atomique, de préférence 0 - 5 % atomique, en particulier 0,1 - 1 % atomique ;
autres gaz : au total 0 - 10 % atomique, de préférence 0 - 5 % atomique, en particulier 0 - 1 % atomique ;
N₂ : le reste.
